# EUROPÄISCHE PATENTSCHRIFT

(11) **EP 2 037 144 B1**
(45) Veröffentlichungstag und Bekanntmachung des Hinweises auf die Patenterteilung: **14.05.2014**
(21) Anmeldenummer: 08014961.0
(22) Anmeldetag: 25.08.2008
(51) Int. Cl.: F16D 25/0635, F16D 25/0638, F16D 25/12

(54) **Verriegeln einer Reibungskupplungsbaugruppe unter Verwendung eines Rückschlagventils**
Locking of a friction coupling assembly using a return valve
Verrouillage d'un embrayage à friction en utilisant un clapet anti-retour

(30) Priorität: 14.09.2007 US 993902 P
(43) Veröffentlichungstag der Anmeldung: 18.03.2009
(73) Patentinhaber: Schaeffler Technologies GmbH & Co. KG, 91074 Herzogenaurach (DE)
(72) Erfinder: Hemphill, Jeffrey, 44321 Copley, Ohio (US); George, Philip, 44691 Wooster, Ohio (US); Gresley, Ross, 29708 Fort Mill, SC (US)

(56) Entgegenhaltungen:
- WO-A1-99/22155
- DE-A1- 1 964 357
- US-A- 5 183 075
- US-A1- 2003 089 573
- US-A1- 2006 054 444
- US-A1- 2006 118 381
- US-A1- 2008 047 800

## Beschreibung

### GEBIET DER ERFINDUNG

Die Erfindung betrifft Verbesserungen an Vorrichtungen zur Kraftübertragung zwischen einer rotatorischen Antriebseinheit (zum Beispiel dem Motor einer Motorfahrzeugs) und einer rotatorisch angetriebenen Einheit (zum Beispiel dem Automatikgetriebe in dem Motorfahrzeug). Insbesondere betrifft die Erfindung eine Reibungskupplungsbaugruppe, die zur Verringerung der Anforderungen an den Pumpendruck ein Rückschlagventil verwendet.

### HINTERGRUND DER ERFINDUNG

Es ist bekannt, dass während des geschlossenen Betriebszustands einer Reibungskupplungseinheit, zum Beispiel einer Nasskupplung, hohe Drücke aufrechterhalten werden, die zum Schließen der Einheit erforderlich sind. Leider wird für die Aufrechterhaltung der hohen Drücke Energie benötigt. Zum Beispiel kann der Kraftstoffverbrauch eines Fahrzeugs, dessen Getriebe durch das Betreiben einer Flüssigkeitspumpe bei hohem Druck in einer geschlossen Position gehalten werden soll, um 4 bis 7 % ansteigen. In der von demselben Anmelder am 20. Juni 2007 eingereichten provisorischen US-Patentanmeldung Nr. 60/936 348 wird eine Feder- und Keilanordnung zum Sperren einer Flüssigkeitskammer zur Verringerung des von einer Pumpe, welche die Kammer mit Flüssigkeit versorgt, aufzubringenden Flüssigkeitsdrucks beschrieben. Diese Anordnung kann durch Verringerung der zeitlichen Verzögerung zwischen den Betriebszuständen einer Kupplung oder einer anderen Einheit verbessert werden, welche sich der Anordnung bedient. In der US-Patentschrift Nr. 5 125 323 (Yonezawa) wird eine Rückschlagventilanordnung zum Versorgen der Hydraulikkammer beschrieben. Leider beschreibt Yonezawa keinen Mechanismus, der den unerwünschten Flüssigkeitsverlust aus der Kammer durch das Rückschlagventil berücksichtigt, während das Rückschlagventil von einer offenen zu einer geschlossenen Position wechselt. Yonezawa beschreibt auch eine nicht wünschenswerte komplexe Anordnung zum Einstellen des Drucks in der Kammer, sobald das Rückschlagventil ganz geschlossen ist.

Somit besteht seit langem ein Bedarf an einer Anordnung zur Verringerung des Flüssigkeitsdrucks, der erforderlich ist, um eine Reibungskupplungseinheit, zum Beispiel eine Nasskupplung, in einer geschlossenen Position zu halten und gleichzeitig den unerwünschten Flüssigkeitsaustausch auszugleichen, der beim Schließen der Reibungskupplungseinheit erfolgt.

Eine gattungsgemäße Reibungskupplungsbaugruppe ist aus der DE 1964357 oder der US 2003/0089573 bekannt.

### KURZZUSAMMENFASSUNG DER ERFINDUNG

Die vorliegende Erfindung betrifft im Allgemeinen eine Reibungskupplungsbaugruppe für eine Kraftfahrzeugeinheit, die Folgendes beinhaltet: mindestens eine durch Reibung einkuppelbare Platte; ein in einer ersten axialen Richtung verschiebbares Kolbenblech, um die mindestens eine durch Reibung einkuppelbare Platte in Reibungskontakt zu bringen; ein erstes elastisches Element, das im Eingriff mit dem ersten Kolbenblech steht und dieses in eine zweite axiale Richtung verschiebt, die der ersten axialen Richtung im Wesentlichen entgegengesetzt ist; ein Rückschlagventil, welches den Flüssigkeitsstrom steuert, um das erste Kolbenblech zu verschieben; und einen Speicher. Wenn Flüssigkeit aus einer Kammer, die zumindest teilweise durch das erste Kolbenblech gebildet wird, durch das Rückschlagventil ausläuft, steuert der Speicher das Flüssigkeitsvolumen in der Kammer, um einen entfernteren Teil des ersten Kolbenblechs, welches die mindestens eine durch Reibung einkuppelbare Platte in Reibungskontakt bringt, in der ersten axialen Richtung in einer weitestmöglichen Position zu halten.

Gemäß einigen Aspekten beinhaltet das Rückschlagventil ein zweites elastisches Element, das mit einer Auslassseite einer Innenhülse in Kontakt steht und das eine erste Kraft ausübt. Wenn eine Summe aus einer durch einen Flüssigkeitsdruck auf die Auslassseite der Platte ausgeübten Kraft und aus der ersten Kraft kleiner ist als die Summe aus einer durch den Flüssigkeitsdruck auf eine Einlassseite der Innenhülse ausgeübten Kraft, kann die Innenhülse in eine erste Position verschoben werden, um den Flüssigkeitsstrom durch das Rückschlagventil in die Kammer freizugeben. Wenn die Summe größer ist als die Summe einer durch den Flüssigkeitsdruck auf die Einlassseite der Innenhülse ausgeübte Kraft, kann die Innenhülse in eine zweite Position verschoben werden, um den Flüssigkeitsstrom durch das Rückschlagventil zu sperren. Der Speicher steuert das Flüssigkeitsvolumen in der Kammer, wenn die Innenhülse von der ersten in die zweite Position wechselt.

Gemäß einigen Aspekten ist das erste Kolbenblech so positioniert, dass es in der Kammer ein erstes Volumen erzeugt, wenn sich der entferntere Teil des ersten Kolbenblechs in der ersten axialen Richtung in der weitestmöglichen Position befindet, wenn die Innenhülse von der ersten zur zweiten Position wechselt und sich das erste Kolbenblech in der zweiten Richtung verbiegt, um in der Kammer ein zweites Volumen zu erzeugen, und wenn eine Differenz zwischen dem ersten und dem zweiten Volumen im Wesentlichen gleich dem durch das Rückschlagventil aus der Kammer strömenden Flüssigkeitsvolumen ist, wenn die Innenhülse von der ersten zur zweiten Position wechselt. Gemäß einigen Aspekten beinhaltet der Speicher ein zweites Kolbenblech und ein dritte elastisches Element, das in Kontakt mit dem ersten und dem zweiten Kolbenblech steht und das eine zweite Kraft ausübt, wobei die Kammer zumindest teilweise durch das zweite Kolbenblech gebildet wird und das zweite Kolbenblech in der ersten axialen Richtung verschoben werden kann, um das dritte elastische Element gegen das erste Kolbenblech zu drücken, wenn die in der Kammer durch die Flüssigkeit auf das zweite Kolbenblech ausgeübte Kraft die zweite Kraft übersteigt. Wenn die Innenhülse von der ersten zur zweiten Position wechselt, wird das zweite Kolbenblech in der zweiten Richtung verschoben, und das dritte elastische Element drückt gegen das erste Kolbenblech, um den entfernteren Teil des ersten Kolbenblechs in der ersten axialen Richtung in der weitestmöglichen Position zu halten.

Gemäß einigen Aspekten beinhaltet das Rückschlagventil ein viertes elastisches Element, das eine dritte Kraft auf eine Platte und eine erste Öffnung ausübt, und die Innenhülse beinhaltet eine zweite und eine dritte Öffnung und mindestens eine Nut auf einer Innenfläche der Innenhülse. Wenn sich die Innenhülse in der zweiten Position befindet und die Kraft auf einer Auslassseite der Platte geringer ist als eine Summe aus der dritten Kraft und der durch den Flüssigkeitsdruck auf der Einlassseite der Platte ausgeübten Kraft, sperrt die Platte die zweite Öffnung, und wenn sich die Innenhülse in der zweiten Position befindet und die Kraft an der Auslassseite der Platte größer ist als die Summe aus der dritten Kraft und der durch den Flüssigkeitsdruck auf der Einlassseite der Platte ausgeübten Kraft, bewegt sich die Platte von der zweiten Öffnung weg und gibt den Flüssigkeitsstrom aus der Kammer durch die mindestens eine Nut und die erste, zweite und dritte Öffnung frei. Mindestens ein Merkmal, die mindestens eine Nut oder die erste, zweite oder dritte Öffnung, ist so dimensioniert, dass es eine Zeitspanne steuert, die zum Auslaufen der Flüssigkeit aus der Kammer erforderlich ist.

Die vorliegende Erfindung umfasst im Allgemeinen auch ein Verfahren zur Steuerung einer Reibungskupplung in einer Kraftfahrzeugeinheit und beinhaltet die folgenden Schritte: Verschieben eines Teils eines Rückschlagventils zu einer ersten Position, um eine Öffnung von einem Kanal zu einer Kammer zu erzeugen, die zumindest teilweise von einem ersten Kolbenblech gebildet wird; Strömen einer Flüssigkeit durch das Rückschlagventil in die Kammer; als Reaktion auf das Strömen der Flüssigkeit Verschieben des ersten Kolbenblechs in einer ersten axialen Richtung, um mindestens eine durch Reibung einkuppelbare Platte derart in Reibungskontakt zu bringen, dass sich ein entfernterer Teil des ersten Kolbenblechs, welches die mindestens eine durch Reibung einkuppelbare Platte in Reibungskontakt bringt, in der ersten axialen Richtung in einer weitestmöglichen Position befindet; Verschieben des Teils des Rückschlagventils zu einer zweiten Position, um die Öffnung zu sperren; und Steuern des Flüssigkeitsvolumens in der Kammer, um den entfernteren Teil des ersten Kolbenblechs in der weitestmöglichen Position zu halten, wenn sich der Teil von der ersten zur zweiten Position verschiebt.

Gemäß einigen Aspekten beinhaltet das Steuern des Flüssigkeitsvolumens in der Kammer das Ausgleichen des von der Kammer durch das Rückschlagventil strömenden Flüssigkeitsvolumens, wenn der Teil von der ersten zur zweiten Position wechselt. Gemäß einigen Aspekten beinhaltet das Steuern des Flüssigkeitsvolumens in der Kammer das Verbiegen des ersten Kolbenblechs, um in der Kammer ein erstes Volumen zu erzeugen, wenn sich der entferntere Teil des ersten Kolbenblechs in der ersten axialen Richtung in der weitestmöglichen Position und wenn sich der Teil in der ersten Position befindet, und das Verbiegen des ersten Kolbenblechs in der zweiten axialen Richtung, um in der Kammer ein zweites Volumen zu erzeugen, wenn der Teil von der ersten zur zweiten Position wechselt, sodass eine Differenz zwischen dem ersten und dem zweiten Volumen im Wesentlichen gleich dem aus der Kammer durch das Rückschlagventil strömenden Flüssigkeitsvolumen ist, wenn der Teil von der ersten zur zweiten Position wechselt.

Gemäß einigen Aspekten beinhaltet das Verschieben des ersten Kolbenblechs in einer ersten axialen Richtung das Verschieben eines zweiten Kolbenblechs als Reaktion auf das Strömen der Flüssigkeit, um ein zwischen dem ersten und dem zweiten Kolbenblech angeordnetes zweites elastisches Element zusammenzudrücken, und das Steuern des Flüssigkeitsvolumens in der Kammer beinhaltet das Verschieben der zweiten Platte durch das zweite elastische Element in der zweiten Richtung, um den entfernteren Teil des ersten Kolbenblechs in der ersten axialen Richtung in der weitestmöglichen Position zu halten, wenn der Teil von der ersten zur zweiten Position wechselt. Gemäß einigen Aspekten handelt es sich bei der Kraftfahrzeugeinheit um ein Automatikgetriebe oder einen Drehmomentwandler. Gemäß einigen Aspekten beinhalt die Reibungskupplungsbaugruppe eine Nasskupplung oder eine Bremse.

Gemäß einigen Aspekten beinhaltet das Rückschlagventil eine erste Öffnung, und der Teil beinhaltet eine zweite Öffnung und mindestens eine Nut auf einer Innenfläche des Teils, und das Verfahren beinhaltet ferner folgende Schritte: Verschieben einer Platte zum Verschließen einer dritten Öffnung in dem Teil, wenn sich der Teil in der zweiten Position befindet und die Kraft an einer Auslassseite der Platte kleiner ist als die Kraft an einer Einlassseite der Platte; Verschieben der Platte zum Öffnen der zweiten Öffnung, wenn sich der Teil in der zweiten Position befindet und die Kraft an der Auslassseite der Platte größer ist als die Kraft an der Einlassseite der Platte; und Auslaufen der Flüssigkeit durch das Rückschlagventil aus der Kammer in einer Zeitspanne, die von einer Abmessung mindestens eines Merkmals, der mindestens einen Nut und der ersten, zweiten und dritten Öffnung, abhängt.

Eine allgemeine Aufgabe der vorliegenden Erfindung besteht darin, eine Anordnung und ein Verfahren zur Verringerung des Flüssigkeitsdrucks bereitzustellen, der zum Halten einer Reibungskupplungseinheit, zum Beispiel einer Nasskupplung, in einer geschlossenen Position zu halten und gleichzeitig den unerwünschten Flüssigkeitsaustausch während des Schließens der Reibungskupplungseinheit auszugleichen.

Diese Aufgabe wird durch die kennzeichnenden Merkmale von Anspruch 1 gelöst.

Diese sowie weitere Aufgaben und Vorteile der vorliegenden Erfindung lassen sich aus der folgenden Beschreibung bevorzugter Ausführungsarten der Erfindung und aus den beiliegenden Zeichnungen und Ansprüchen ersehen.

### KURZBESCHREIBUNG DER ZEICHNUNGEN

Das Wesen und die Funktionsweise der vorliegenden Erfindung werden in der folgenden detaillierten Beschreibung der Erfindung in Verbindung mit den beiliegenden Figuren ausführlich beschrieben, wobei:
Fig. 1A eine perspektivische Ansicht eines Zylinderkoordinatensystems ist, welches die in der vorliegenden Patentanmeldung gebrauchten räumlichen Begriffe veranschaulicht;
Fig. 1B eine perspektivische Ansicht eines Objekts in dem Zylinderkoordinatensystem von Fig. 1A ist, welches die in der vorliegenden Erfindung gebrauchten räumlichen Begriffe veranschaulicht;
Fig. 2 eine Teilquerschnittsansicht eines Drehmomentwandlers mit einer Reibungskupplungsbaugruppe gemäß der vorliegenden Erfindung ist;
Fig. 3 eine Querschnittsansicht des in Fig. 2 gezeigten Rückschlagventils ist;
Fig. 4 eine Querschnittsansicht eines Speichers für eine Reibungskupplungsbaugruppe gemäß der vorliegenden Erfindung ist;
Fig. 5 eine Teilquerschnittsansicht eines Getriebes mit einer Reibungskupplungsbaugruppe gemäß der vorliegenden Erfindung ist; und
Fig. 6 ein Diagramm ist, welches die bei der Anwendung einer Reibungskupplungsbaugruppe gemäß der vorliegenden Erfindung auftretenden Flüssigkeitsdrücke zeigt.

### DETAILLIERTE BESCHREIBUNG DER ERFINDUNG

Von vornherein sollte klar sein, dass gleiche Bezugsnummern in verschiedenen Zeichnungsansichten identische oder funktionell ähnliche Strukturelemente der Erfindung bezeichnen. Obwohl die vorliegende Erfindung unter Bezug auf die gegenwärtig als bevorzugt angesehenen Aspekte beschrieben wird, sollte klar sein, dass die beanspruchte Erfindung nicht auf die beschriebenen Aspekte beschränkt ist.

Außerdem ist klar, dass diese Erfindung nicht auf die bestimmten beschriebenen Verfahren, Materialien und Modifikationen beschränkt ist und insofern natürlich variieren kann. Ferner ist klar, dass die hier gebrauchten Begriffe nur zur Beschreibung bestimmter Aspekte dienen und nicht als Einschränkung des Geltungsbereichs der vorliegenden Erfindung zu verstehen sind, der nur durch die angehängten Ansprüche eingeschränkt wird.

Sofern nicht anderweitig definiert, haben alle hier gebrauchten technischen und wissenschaftlichen Begriffe dieselbe Bedeutung, wie sie einem Fachmann geläufig ist, an den sich diese Erfindung richtet. Obwohl zum Durchführen oder Testen der Erfindung beliebige Verfahren, Einrichtungen oder Materialien verwendet werden können, die den hier beschriebenen ähnlich oder gleichwertig sind, werden im Folgenden die bevorzugten Verfahren, Einrichtungen und Materialien beschrieben.

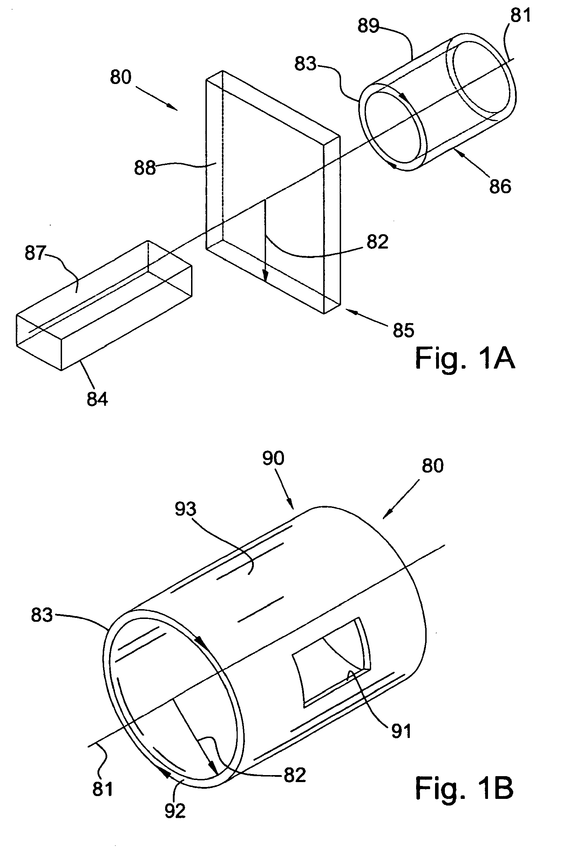

Fig. 1A ist eine perspektivische Ansicht eines Zylinderkoordinatensystems 80, welches die in der vorliegenden Patentanmeldung gebrauchten räumlichen Begriffe veranschaulicht. Die vorliegende Erfindung wird zumindest teilweise im Zusammenhang mit einem Zylinderkoordinatensystem beschrieben. Das System 80 weist eine Längsachse 81 auf, die als Bezug für die folgenden räumlichen und Richtungsbegriffe dient. Die Attribute "axial", "radial" und "Umfangs-" beziehen sich auf eine Ausrichtung parallel zur Achse 81, zum Radius 82 (der senkrecht zur Achse 81 ist) bzw. zum Umfang 83. Die Attribute "axial", "radial" und "Umfangs-" beziehen sich auch auf eine Ausrichtung parallel zu entsprechenden Ebenen. Zur Verdeutlichung der Lage der verschiedenen Ebenen dienen die Objekte 84, 85 und 86. Die Fläche 87 des Objekts 84 bildet eine axiale Ebene. Das heißt, die Achse 81 bildet entlang der Fläche eine Linie. Die Fläche 88 des Objekts 85 bildet eine radiale Ebene. Das heißt, der Radius 82 bildet entlang der Fläche eine Linie. Die Fläche 89 des Objekts 86 bildet eine Umfangsebene. Das heißt, der Umfang 83 bildet entlang der Fläche eine Linie. Ein weiteres Beispiel zeigt, dass eine axiale Bewegung oder Lage parallel zur Achse 81 verläuft, eine radiale Bewegung oder Lage parallel zum Radius 82 verläuft und eine Umfangsbewegung oder Lage auf dem Umfang parallel zum Umfang 83 verläuft. Eine Drehung erfolgt in Bezug auf die Achse 81.

Die Attribute "axial", "radial" und "Umfangs-" beziehen sich auf eine Ausrichtung parallel zur Achse 81, zum Radius 82 bzw. zum Umfang 83. Die Attribute "axial", "radial" und "Umfangs-" beziehen sich auch auf eine Ausrichtung parallel zu entsprechenden Ebenen.

Fig. 1B ist eine perspektivische Ansicht eines Objekts 90 im Zylinderkoordinatensystem 80 von Fig. 1A, welches die in der vorliegenden Anmeldung gebrauchten räumlichen Begriffe darstellt. Das zylindrische Objekt 90 ist repräsentativ für ein zylindrisches Objekt in einem Zylinderkoordinatensystem und keineswegs als Einschränkung der vorliegenden Erfindung zu verstehen. Das Objekt 90 beinhaltet eine axiale Fläche 91, eine radiale Fläche 92 und eine Umfangsfläche 93. Die Fläche 91 ist Teil einer axialen Ebene, die Fläche 92 ist Teil einer radialen Ebene, und die Fläche 93 ist Teil einer Umfangsebene.

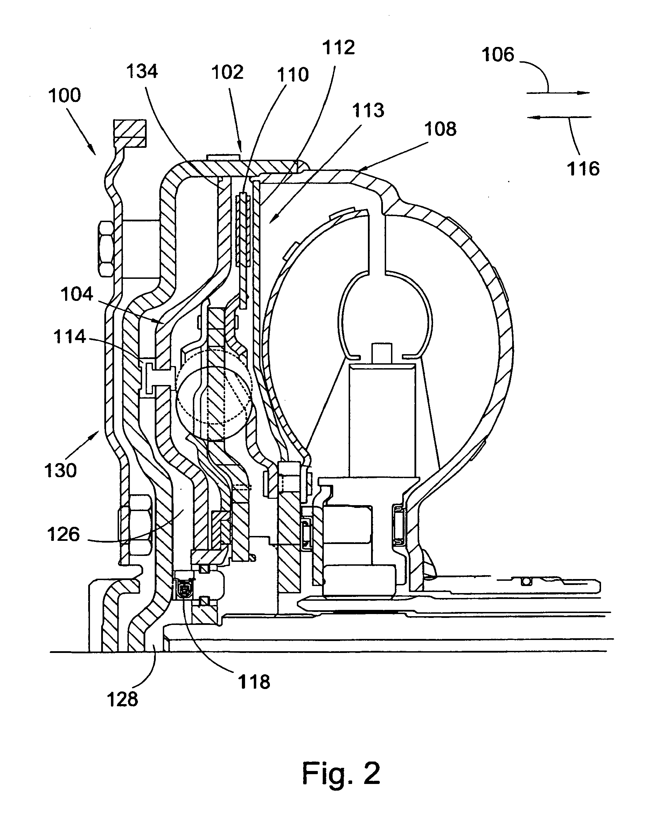

Fig. 2 ist eine Teilquerschnittsansicht eines Drehmomentwandlers mit einer Reibungskupplungsbaugruppe gemäß der vorliegenden Erfindung.

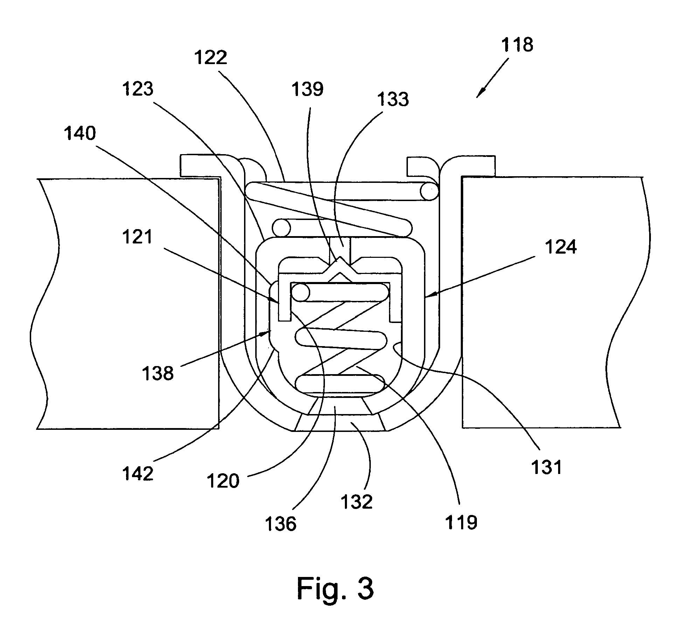

Fig. 3 ist eine Querschnittsansicht des in Fig. 2 gezeigten Rückschlagventils. Die folgende Beschreibung ist in Verbindung mit den Figuren 2 und 3 zu sehen. Eine Reibungskupplungsbaugruppe 100 für eine Kraftfahrzeugeinheit beinhaltet mindestens eine durch Reibung einkuppelbare Platte 102 und ein Kolbenblech 104, das in axialer Richtung 106 verschoben werden kann, um die mindestens eine durch Reibung einkuppelbare Platte in Reibungskontakt zu bringen. Bei der Baugruppe 100 kann es sich um eine Nasskupplung oder um eine Bremse handeln. Die folgende Erörterung betrifft eine Nasskupplung; es ist jedoch klar, dass die Erörterung auch auf eine Bremse bezogen werden kann. Eine Baugruppe gemäß der vorliegenden Erfindung kann in Verbindung mit einer beliebigen in der Technik bekannten Kraftfahrzeugeinheit angewendet werden. Gemäß einigen Aspekten handelt es sich bei der Kraftfahrzeugeinheit um ein Automatikgetriebe oder um einen Drehmomentwandler. Die folgende Erörterung betrifft einen Drehmomentwandler 108; jedoch sollte klar sein, dass die Erörterung auch auf ein Automatikgetriebe angewendet werden kann. Eine Baugruppe gemäß der vorliegenden Erfindung ist nicht auf eine bestimmte Anzahl oder eine bestimmte Art durch Reibung einkuppelbarer Platten beschränkt. Gemäß einigen Aspekten beinhalten die Platten 102 eine Kupplungsscheibe 110 und eine Platte 112, die in der Nasskupplung 113 enthalten sind.

Die Baugruppe 100 beinhaltet ein elastisches Element 114, das in Kontakt mit dem Kolbenblech 104 steht und das Kolbenblech in eine axiale Richtung 116 drückt, die der axialen Richtung 106 im Wesentlichen entgegengesetzt ist. Bei dem elastischen Element 114 kann es sich um ein beliebiges in der Technik bekanntes elastisches Element handeln. Gemäß einigen Aspekten handelt es sich bei dem Element 114 um eine Blattfeder. Die Baugruppe beinhaltet auch ein Rückschlagventil 118 mit einem elastischen Element 119, das an der Einlassseite 120 der Platte bzw. des Tellerventils 121 anliegt. Das Rückschlagventil beinhaltet auch ein elastisches Element 122, das an der Auslassseite 123 der Innenhülse 124 anliegt. Bei den elastischen Elementen 119 und 122 kann es sich um beliebige in der Technik bekannte elastische Elemente handeln, zum Beispiel um Schraubenfedern. Das Rückschlagventil steuert den Flüssigkeitsstrom zwischen der Kammer 126, die zumindest teilweise durch das Blech 104 gebildet wird, und dem Kanal 128 und dadurch die Verschiebung des Kolbenblechs 104. Die Baugruppe 100 beinhaltet auch einen Speicher 130, der zum Ausgleichen des Flüssigkeitsverlustes aus der Kammer 126 dient, wenn die Kupplung 113 geschlossen ist und das Rückschlagventil von einer offenen zu einer geschlossenen Position wechselt.

Das Rückschlagventil funktioniert wie folgt. Wenn eine Summe der durch den Flüssigkeitsdruck auf der Einlassseite 131 der Hülse ausgeübten Kräfte größer ist als die vom Element 122 ausgeübte Kraft zuzüglich der vom Flüssigkeitsdruck in der Kammer 126 ausgeübten Kraft, kann die Hülse, wie in der Technik bekannt, zu einer (nicht gezeigten) ersten oder offenen Position verschoben werden, um den Flüssigkeitsstrom durch das Rückschlagventil in die Kammer zu ermöglichen. Zum Beispiel bewegt sich die Hülse in der Weise, dass die Flüssigkeit durch die Öffnung 132 strömen kann. Das heißt, die Hülse ist um die Öffnung 132 herum nicht abgedichtet, und die Flüssigkeit kann durch die Öffnung strömen. Die Kraft auf der Seite 131 verschiebt auch das Tellerventil gegen die Öffnung 133 und dichtet damit die Öffnung ab. Wenn die Summe der durch den Flüssigkeitsdruck auf der Auslassseite der Hülse ausgeübten Kraft und der vom Element 122 ausgeübten Kraft größer ist als die vom Flüssigkeitsdruck auf der Einlassseite der Hülse ausgeübte Kraft, kann die Hülse zu einer zweiten oder abgedichteten Position verschoben werden, um den Flüssigkeitsstrom zwischen der Kammer 126 und dem Kanal abzusperren. Das heißt, die Hülse dichtet die Öffnung 132 ab. Die weitere Funktionsweise des Tellerventils 121 und des Elements 119 wird im Folgenden beschrieben.

Der Speicher steuert das Flüssigkeitsvolumen in der Kammer 126, um den entfernteren Teil 134 des Kolbenblechs 104, der die Platten 102 in Reibungskontakt bringt, in der axialen Richtung 106 in einer weitestmöglichen Position zu halten, wenn die Hülse von der ersten zur zweiten Position wechselt. Das heißt, sobald die Kammer 126 voll unter Druck steht, ist das Kolbenblech 104 in Richtung 106 verschoben, und der Teil 134 hält die Kupplung 113 geschlossen, und der Speicher stellt sicher, dass sich der Teil 134 nicht in Richtung 116 verschiebt, wodurch die Aufnahmekapazität der Kupplung 113 abnähme, wenn das Rückschlagventil schließt. Mit anderen Worten, der Speicher gleicht das aus der Kammer durch das Rückschlagventil tretende Flüssigkeitsvolumen aus, wenn sich die Hülse von der ersten zur zweiten Position verschiebt.

Gemäß einigen Aspekten beinhaltet das Kolbenblech 104 den Speicher. Das heißt, das Kolbenblech 104 arbeitet so, dass es die Speicherfunktion ausführt. Wenn sich zum Beispiel der entferntere Teil 134 in axialer Richtung 106 in der weitestmöglichen Position und die Hülse sich in der ersten Position befindet, ist das Kolbenblech 104 so positioniert, dass es in der Kammer 126 ein erstes Volumen erzeugt. Das Kolbenblech 104 ist zumindest teilweise flexibel, und als Reaktion auf den Flüssigkeitsdruck in der Kammer 126 verbiegt sich ein Teil des Kolbenblechs 104 zum Beispiel in Richtung 106, um einen Teil des ersten Volumens in der Kammer 126 zu bilden. Wenn die Hülse von der ersten zur zweiten Position wechselt (die Kammer steht dann voll unter Druck), tritt ein bestimmtes Flüssigkeitsvolumen aus der Kammer durch das Rückschlagventil in den Kanal. Um dieses aus der Kammer austretende Flüssigkeitsvolumen auszugleichen, verbiegt sich das Kolbenblech zum Beispiel in der zweiten Richtung, um das Volumen in der Kammer zu verringern. Die durch das Verbiegen des Kolbenblechs bedingte Volumenverringerung ist im Wesentlichen gleich dem durch das Rückschlagventil aus der Kammer austretenden Flüssigkeitsvolumen. Somit braucht sich nicht das gesamte Kolbenblech, insbesondere der Teil 134, als Reaktion auf die oben erwähnte Änderung des Flüssigkeitsvolumens in Richtung 116 zu verschieben, und die Kupplung 113 bleibt ganz geschlossen. Das heißt, die Aufnahmekapazität der Kupplung wird trotz des durch das Rückschlagventil tretenden Flüssigkeitsvolumens nicht verringert.

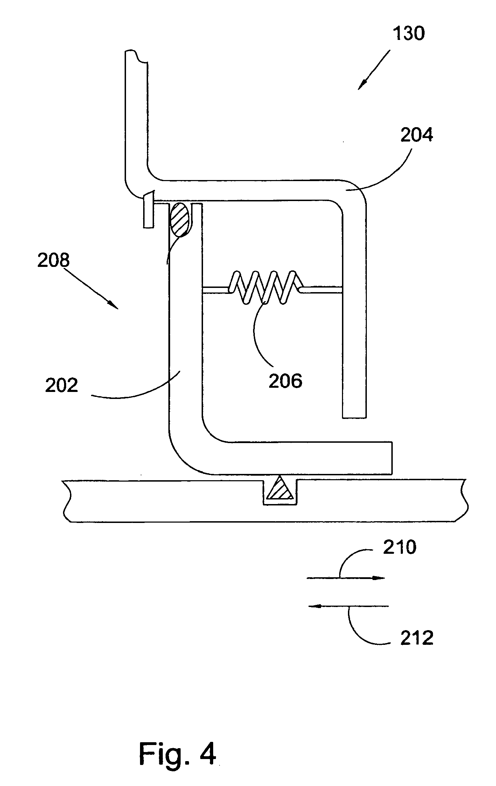

Fig. 4 ist eine Querschnittsansicht eines Speichers für eine Reibungskupplungsbaugruppe gemäß der vorliegenden Erfindung. Gemäß einigen Aspekten beinhaltet der Speicher 130 Kolbenbleche 202 und 204 und ein elastisches Element 206, das mit den Kolbenblechen 202 und 204 verbunden ist. Bei dem elastischen Element 206 kann es sich um ein beliebiges in der Technik bekanntes elastisches Element handeln, zum Beispiel um eine Schraubenfeder, eine Tellerfederoder eine Elastomerfeder. Das Kolbenblech 204 ist mit durch Reibung einkuppelbaren Platten, zum Beispiel den Platten 102, verbunden, wobei insbesondere (nicht gezeigt) ein entfernterer Teil des Kolbenblechs 204 dem in Fig. 2 gezeigten entfernteren Teil 134 analog ist. Die Kammer 208 wird zumindest teilweise durch das Kolbenblech 202 gebildet und steht über die Flüssigkeit mit dem (nicht gezeigten) Rückschlagventil 118 in Verbindung. Im Allgemeinen ist die Kammer 208 der in Fig. 2 gezeigten Kammer 126 analog. Das Kolbenblech 202 kann in axialer Richtung 210 verschoben werden, um das elastische Element gegen das Kolbenblech 204 zu drücken, wenn die durch den Flüssigkeitsdruck in der Kammer auf das Kolbenblech 202 ausgeübte Kraft eine durch das Element 206 ausgeübte Kraft übersteigt, das heißt, wenn die Kraft am Kolbenblech den Widerstand des Elements überwindet. Wenn das Element 206 zusammengedrückt wird, wird in einigen Fällen die von der Flüssigkeit in der Kammer 208 ausgeübte Kraft nach dem Zusammendrücken des Elements vom Kolbenblech 202 zum Kolbenblech 204 übertragen, und das Kolbenblech 204 verschiebt sich in Richtung 210, um durch Reibung mit den Platten 102 einzukuppeln.

Sobald die Kammer 208 vollständig gefüllt ist und das Kolbenblech 204 die Nasskupplung geschlossen hat, wechselt die Hülse im Rückschlagventil von der ersten zur zweiten Position, wobei es, wie oben bei der Kammer 126 beschrieben, anschließend zum Flüssigkeitsverlust aus der Kammer 208 kommt. Der Speicher steuert jedoch das Flüssigkeitsvolumen in der Kammer 208, um den entfernteren Teil des Kolbenblechs 204 in axialer Richtung 210 in einer weitestmöglichen Position zu halten, wenn die Hülse von der ersten zur zweiten Position wechselt. Das heißt, als Reaktion auf das Ausströmen der Flüssigkeit aus der Kammer verschiebt sich das Kolbenblech 202 in axialer Richtung 212, da das elastische Element 206 gegen das Kolbenblech 204 drückt. Die Bewegung des Kolbenblechs 202 und die Gegenkraft des Elements 206 bewirken die Beibehaltung der axialen Position des Kolbenblechs 204, insbesondere des entfernteren Teils des Kolbenblechs, sodass der entferntere Teil in der ersten axialen Richtung in der weitestmöglichen Position verbleibt. Das heißt, das Volumen der durch die Bewegung des Kolbenblechs 202 verdrängten Flüssigkeit ist im Wesentlichen gleich dem Volumen der durch das Rückschlagventil aus der Kammer austretenden Flüssigkeit.

Gemäß einigen Aspekten werden die Öffnungen 132, 133 und 136, eine oder mehrere Nuten 138 auf der Innenfläche der Innenhülse 124 und das Element 119 zum Entleeren der Kammer, zum Beispiel der Kammer 126, verwendet. Das Rückschlagventil ist nicht auf eine bestimmte Anzahl, Größe, Form oder Anordnung von Nuten beschränkt. Wenn die Summe der durch den Flüssigkeitsdruck im Kanal und das Element 119 auf die Einlassseite 120 des Tellerventils ausgeübten Kräfte kleiner ist als die Summe der durch den Flüssigkeitsdruck in der Kammer und das Element 122 auf die Auslassseite 139 des Tellerventils ausgeübten Kräfte ist, bewegt sich das Tellerventil von der Öffnung 133 weg und gibt die Öffnung frei. Dann wird ein Flüssigkeitspfad von der Kammer durch die Öffnung 133, die Nuten 138 und die Öffnungen 136 und 132 bis zum Kanal erzeugt. Wenn das Tellerventil die Öffnung 133 sperrt, stellt es auch eine Dichtung zur Seite 120 hin her und verhindert das Strömen von Flüssigkeit durch die Nuten. Wenn das Tellerventil die Öffnung 133 freigibt und sich weit genug auf die Öffnungen 136 und 132 zu bewegt, legt das Tellerventil den oberen Teil 140 der Nuten frei und erzeugt so einen Flüssigkeitspfad von der Öffnung 133 zu den Nuten, während das Ende 142 der Nuten offen bleibt, das heißt, die Flüssigkeit durch die Nuten strömen kann. Gemäß einigen Aspekten sind an der Innenhülse keine Nuten gebildet, sondern die Innenhülse verjüngt sich so, dass bei der Bewegung des Tellerventils von der Öffnung 133 weg ein Zwischenraum zwischen dem Tellerventil und der Seite 131 erzeugt wird, der das Strömen der Flüssigkeit aus der Öffnung 133 am Tellerventil vorbei ermöglicht.

Um die Kammer im voll befülltem Zustand zu halten, muss das Tellerventil gegen die Innenhülse gedrückt bleiben, um die Öffnung 133 zu sperren. Die Kraft zum Halten des Tellerventils wird durch das Element 119 und die vom Flüssigkeitsdruck auf die Einlassseite 120 ausgeübte Kraft geliefert. Die Bauweise des Rückschlagventils ermöglicht auf vorteilhafte Weise die Anwendung eines geringeren Drucks im Kanal, um das Tellerventil gegen die Öffnung zu drücken. Erstens wird die zum Halten des Tellerventils in der Dichtungsposition erforderliche Kraft durch die vom Element 119 gelieferte Kraft verstärkt. Zweitens ist die Fläche des Tellerventils, auf welche der Flüssigkeitsdruck in der Kammer einwirkt, kleiner als die Fläche des Tellerventils, auf welche der Flüssigkeitsdruck im Kanal einwirkt. Da die Kraft gleich dem Produkt aus Druck und Fläche ist, führt ein Flüssigkeitsdruck im Kanal zu einer stärkeren auf das Tellerventil einwirkenden Kraft als derselbe Flüssigkeitsdruck in der Kammer. Wenn beispielsweise die Flüssigkeit in der Kammer 126 zum Einkuppeln der Kupplung 113 mit einem Druck von 10 bar beaufschlagt wird und das Element 119 eine Kraft liefert, die einem Druck von 4 bar entspricht, braucht von einer (nicht gezeigten) Pumpe im Kanal 128 nur wenig mehr als 6 bar an Flüssigkeitsdruck aufgebracht zu werden, um das Tellerventil in der geschlossenen Position zu halten. Ohne das Element 119 müsste die Pumpe Flüssigkeit unter einem Druck durch den Kanal 128 zuführen, der etwas mehr als 10 bar beträgt, um das Tellerventil in der Dichtungsposition zu halten.

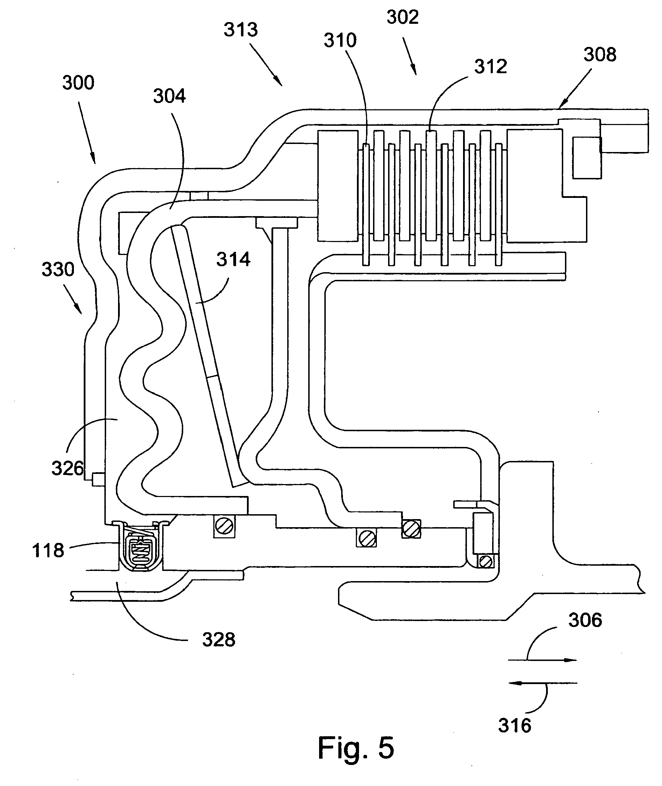

Fig. 5 ist eine Teilquerschnittsansicht eines Getriebes mit einer Reibungskupplungsbaugruppe gemäß der vorliegenden Erfindung. Im Allgemeinen kann die Erörterung der Figuren 2 bis 4 auf Fig. 5 angewendet werden. Die Reibungskupplungsbaugruppe 300 für eine Kraftfahrzeugeinheit beinhaltet mindestens eine durch Reibung einkuppelbare Platte 302 und ein Kolbenblech 304, das in axialer Richtung 306 verschoben werden kann, um die mindestens eine durch Reibung einkuppelbare Platte in Reibungskontakt zu bringen. Die Baugruppe 300 kann eine Nasskupplung oder eine Bremse beinhalten, wie dies oben bei der Baugruppe 100 bereits beschrieben wurde. Die folgende Erörterung bezieht sich auf ein Getriebe 308. In Fig. 5 beinhalten die Platten 302 Kupplungsscheiben 310 und Antriebsscheiben 312 und bilden eine Nasskupplung 313.

Die Baugruppe 300 beinhaltet ein elastisches Element 314, das am Kolbenblech 304 anliegt und dieses in eine axiale Richtung 316 drückt, die der axialen Richtung 306 im Wesentlichen entgegengesetzt ist. Bei dem elastischen Element 314 kann es sich um ein beliebiges in der Technik bekanntes elastisches Element handeln. Gemäß einigen Aspekten ist das Element 314 eine Tellerfeder oder eine Belleville-Feder. Die Baugruppe beinhaltet auch ein Rückschlagventil 118. Das Rückschlagventil steuert den Flüssigkeitsstrom zwischen der Kammer 326, die zumindest teilweise durch das Kolbenblech 304 gebildet wird, und den Kanal 328 und steuert somit die Verschiebung des Kolbenblechs 304. Die Baugruppe 300 beinhaltet auch einen Speicher 330, der zum Ausgleichen des Flüssigkeitsverlustes aus der Kammer 326 dient, wenn die Kupplung 313 geschlossen wird und das Rückschlagventil von einer offenen zu einer geschlossenen Position wechselt.

Gemäß einigen Aspekten ist das Kolbenblech 304 ausreichend biegsam, sodass es die oben im Zusammenhang mit der Platte 102 Speicherfunktion ausführt. Das heißt, das Kolbenblech 304 verbiegt sich als Reaktion auf den Druck in der Kammer 326. Gemäß einigen (nicht gezeigten) Aspekten beinhaltet die Baugruppe 300 einen Speicher mit einer in Fig. 4 gezeigten Anordnung mit zwei Kolbenblechen.

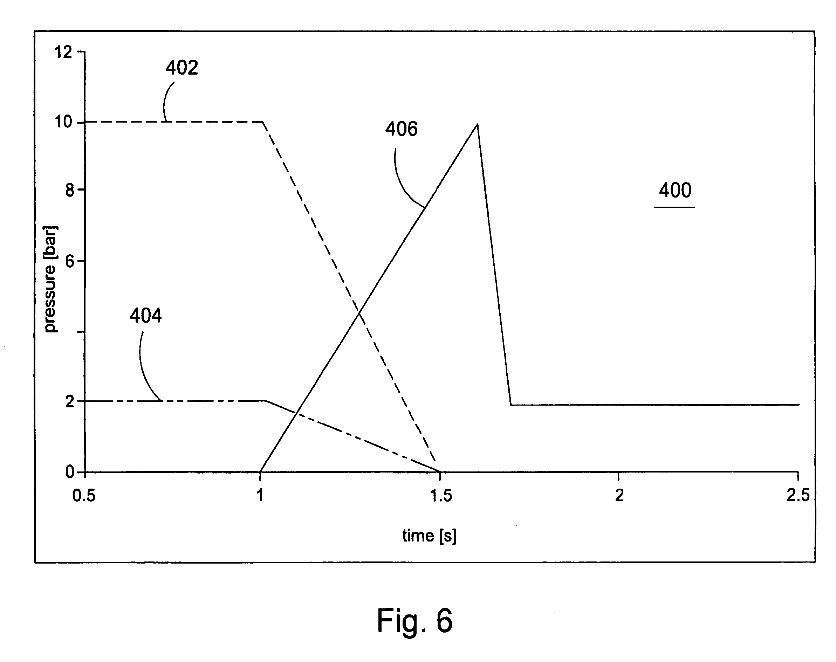

Fig. 6 stellt ein Diagramm dar, das die bei der Anwendung einer Reibungskupplungsbaugruppe gemäß der vorliegenden Erfindung auftretenden Flüssigkeitsdrücke zeigt. Die folgende Beschreibung ist in Verbindung mit den Figuren 2 bis 6 zu sehen, obwohl die Erörterung ein in Fig. 5 gezeigtes Getriebe betrifft. Gemäß einigen Aspekten sind eine oder mehrere Öffnungen 132, 133 und 136 oder Nuten 138 so dimensioniert, dass sie einen Flüssigkeitsstrom aus der Kammer 326 durch das Rückschlagventil in den Kanal 328 steuern. Zu diesem Abfließen der Flüssigkeit kommt es, wenn sich das Tellerventil in der offenen Position befindet (Öffnung 133 ist offen).

Insbesondere steuern die Nuten oder Öffnungen eine Zeitspanne, die zum Entspannen der Kammer 326 erforderlich ist. Diese Zeitspanne beeinflusst die Übergangszeit beim Gangwechsel im Getriebe 308. Zum Beispiel kann der Wechsel in einen neuen Gang so lange nicht durchgeführt werden, wie der vorherige Gang, zum Beispiel einschließlich der Nasskupplung 313, noch nicht weit genug ausgerückt ist. Die Kupplung 313 wird erst dann weit genug ausgerückt, wenn die Kammer 326 ausreichend geleert ist. Wünschenswert ist es, die Innenhülse 124 in ungefähr 0,5 Sekunden von einer geschlossenen zu einer offenen Position zu verschieben (die Kammer zu leeren). Das Diagramm 400 zeigt eine Linie 402, die den Druck in der Kammer 326 darstellt, eine Linie 404, die den Anfangsdruck bzw. den Druck im Kanal 328 darstellt, und eine Linie 406, die den Druck in einer (nicht gezeigten) laufenden Kupplung zeigt. Gemäß Diagramm 400 wird die Kammer 326 auf vorteilhafte Weise in 0,5 Sekunden geleert.

Eine Kraftfahrzeugeinheit ist nicht auf die Verwendung einer bestimmten Anzahl von Reibungskupplungsbaugruppen gemäß der vorliegenden Erfindung beschränkt. Ferner sollte klar sein, dass eine Kraftfahrzeugeinheit, welche eine Reibungskupplungsbaugruppe gemäß der vorliegenden Erfindung verwendet, nicht auf die in den Figuren gezeigte Anordnung beschränkt ist.

Die vorliegende Erfindung beinhaltet auch ein Verfahren zum Steuern eines Reibungskupplungsvorgangs in einer Kraftfahrzeugeinheit. In einem ersten Schritt wird ein Teil eines Rückschlagventils zu einer ersten Position verschoben, um eine Öffnung von einem Kanal zu einer Kammer zu erzeugen, die zumindest teilweise durch ein erstes Kolbenblech gebildet wird. In einen zweiten Schritt strömt die Flüssigkeit durch das Rückschlagventil in die Kammer. In einem dritten Schritt verschiebt sich das erste Kolbenblech als Reaktion auf das Strömen der Flüssigkeit in eine erste axiale Richtung, um zumindest eine durch Reibung einkuppelbare Platte so in Reibungskontakt zu bringen, dass sich ein entfernterer Teil des Kolbenblechs, der die mindestens eine durch Reibung einkuppelbare Platte in Reibungskontakt bringt, in der ersten axialen Richtung in einer weitestmöglichen Position befindet. In einem vierten Schritt wird der Teil des Rückschlagventils zu einer zweiten Position verschoben, um die Öffnung zu sperren. In einem fünften Schritt wird das Flüssigkeitsvolumen in der Kammer so gesteuert, dass der entferntere Teil des ersten Kolbenblechs in der weitestmöglichen Position verbleibt, wenn der Teil von der ersten zur zweiten Position wechselt.

Gemäß einigen Aspekten beinhaltet das Steuern des Flüssigkeitsvolumens das Ausgleichen eines Flüssigkeitsvolumens, das durch das Rückschlagventil aus der Kammer austritt, wenn der Teil von der ersten zur zweiten Position wechselt. Gemäß einigen Aspekten beinhaltet das Steuern des Flüssigkeitsvolumens in der Kammer das Verbiegen des ersten Kolbenblechs, um in der Kammer ein erstes Volumen zu erzeugen, wenn sich der entferntere Teil des ersten Kolbenblechs in der ersten axialen Richtung in der weitestmöglichen Position und der Teil in der ersten Position befindet, und das Verbiegen des ersten Kolbenblechs in der zweiten axialen Richtung, um in der Kammer ein zweites Volumen zu erzeugen, wenn der Teil von der ersten zur zweiten Position wechselt, sodass eine Differenz zwischen dem ersten und dem zweiten Volumen im Wesentlichen gleich dem Flüssigkeitsvolumen ist, das durch das Rückschlagventil aus der Kammer austritt, wenn der Teil von der ersten zur zweiten Position wechselt.

Gemäß einigen Aspekten beinhaltet das Verschieben des ersten Kolbenblechs in einer ersten axialen Richtung das Verschieben eines zweiten Kolbenblechs als Reaktion auf das Strömen der Flüssigkeit, um ein zwischen dem ersten und dem zweiten Kolbenblech angeordnetes zweites elastisches Element, und das Steuern des Flüssigkeitsvolumens in der Kammer beinhaltet das Verschieben der zweiten Platte durch das zweite elastische Element in der zweiten Richtung, damit der entferntere Teil des ersten Kolbenblechs in der ersten axialen Richtung in der weitestmöglichen Position verbleibt, wenn der Teil von der ersten zur zweiten Position wechselt. Gemäß einigen Aspekten handelt es sich bei der Kraftfahrzeugeinheit um ein Automatikgetriebe oder um einen Drehmomentwandler. Gemäß einigen Aspekten beinhaltet die Reibungskupplungsbaugruppe eine Nasskupplung oder eine Bremse.

Gemäß einigen Aspekten beinhaltet das Rückschlagventil eine erste Öffnung, und das Verfahren beinhaltet das Verschieben einer Platte, um eine zweite Öffnung in dem Teil zu schließen, wenn sich der Teil in der zweiten Position befindet und die Kraft an einer Auslassseite der Platte kleiner ist als die Kraft an einer Einlassseite der Platte; das Verschieben der Platte zum Öffnen der zweiten Öffnung, wenn sich der Teil in der zweiten Position befindet und die Kraft an der Auslassseite der Platte größer ist als die Kraft an der Einlassseite der Platte; und das Abfließen der Flüssigkeit aus der Kammer durch das Rückschlagventil während einer Zeitdauer, die von einer Abmessung mindestens einer Öffnung, der ersten oder der zweiten Öffnung, abhängt.

## Patentansprüche

1. Reibungskupplungsbaugruppe (100) für eine Kraftfahrzeugeinheit, mit mindestens einer durch Reibung einkuppelbaren Platte (112) und einem ersten Kolbenblech (104), das in einer ersten axialen Richtung (106) verschoben werden kann, um die mindestens eine durch Reibung einkuppelbare Platte (112) in Reibungskontakt zu bringen und einem ersten in Kontakt mit dem ersten Kolbenblech (104) befindlichen elastischen Element (114), welches das erste Kolbenblech (104) in eine zweite axiale Richtung (116) drückt, die der ersten axialen Richtung (106) im Wesentlichen entgegengesetzt ist sowie mit einem Rückschlagventil (118), welches den Flüssigkeitsstrom zwischen einem Kanal (128) und einer teilweise durch das erste Kolbenblech gebildeten Kammer (126) so steuert, dass das erste Kolbenblech (104) verschoben wird, **dadurch gekennzeichnet, dass** ein Teil des Rückschlagventils (118) in einer ersten Position den Flüssigkeitsstrom durch das Rückschlagventil (118) in die Kammer (126) ermöglicht und in einer zweiten Position den Flüssigkeitsstrom zwischen der Kammer (126) und dem Kanal (128) absperrt wobei ein Speicher (130), das Flüssigkeitsvolumen in der Kammer (126) so steuert, dass wenn Flüssigkeit aus der Kammer (126) durch das Rückschlagventil (118) beim Wechsel von der ersten zu der zweiten Position austritt, ein Teil (134) des ersten Kolbenblechs (104), der die mindestens eine durch Reibung einkuppelbare Platte (112) in Reibungskontakt bringt, in der ersten axialen Richtung (106) in einer weitestmöglichen Position verbleibt.

2. Reibungskupplungsbaugruppe nach Anspruch 1, bei der das Rückschlagventil ein mit einer Auslassseite einer Innenhülse in Kontakt stehendes zweites elastisches Element beinhaltet, wobei das zweite elastische Element eine erste Kraft ausübt, wobei die Innenhülse, wenn eine Summe aus einer durch den einen Flüssigkeitsdruck auf der Auslassseite der Platte und der ersten Kraft kleiner ist als eine Summe aus einer durch den Flüssigkeitsdruck auf eine Einlassseite der Innenhülse ausgeübten Kraft, zu einer ersten Position verschoben werden kann, um die Flüssigkeitsströmung durch das Rückschlagventil in die Kammer zu ermöglichen, wobei die Innenhülse, wenn die Summe größer ist als eine Summe einer durch den Flüssigkeitsdruck auf die Einlassseite der Innenhülse ausgeübten Kraft, zu einer zweiten Position verschoben werden kann, um den Flüssigkeitsstrom durch das Rückschlagventil zu sperren, und wobei der Speicher das Flüssigkeitsvolumen in der Kammer steuert, wenn die Innenhülse von der ersten zur zweiten Position wechselt.

3. Reibungskupplungsbaugruppe nach Anspruch 2, bei der das erste Kolbenblech, wenn sich der entferntere Teil des ersten Kolbenblechs in der ersten axialen Richtung in der weitestmöglichen Position und die Innenhülse in der ersten Position befindet, so positioniert ist, dass in der Kammer ein erstes Volumen erzeugt wird, wobei sich das erste Kolbenblech, wenn die Innenhülse von der ersten zur zweiten Position wechselt, in der zweiten Richtung verbiegt, um in der Kammer ein zweites Volumen zu erzeugen, und wobei eine Differenz zwischen dem ersten und dem zweiten Volumen im Wesentlichen gleich dem durch das Rückschlagventil aus der Kammer austretenden Flüssigkeitsvolumen ist, wenn die Innenhülse von der ersten zur zweiten Position wechselt.

4. Reibungskupplungsbaugruppe nach Anspruch 2, bei welcher der Speicher ein zweites Kolbenblech und ein drittes elastisches Element beinhaltet, das in Kontakt mit dem ersten und dem zweiten Kolbenblech steht, wobei das dritte elastische Element eine zweite Kraft ausübt, die Kammer zumindest teilweise durch das zweite Kolbenblech gebildet wird und das zweite Kolbenblech in der ersten axialen Richtung verschoben werden kann, um das dritte elastische Element gegen das erste Kolbenblech zu drücken, wenn die von der Flüssigkeit in der Kammer auf das zweite Kolbenblech ausgeübte Kraft die zweite Kraft übersteigt.

5. Reibungskupplungsbaugruppe nach Anspruch 4, bei der sich die zweite Platte, wenn die Innenhülse von der ersten zur zweiten Position wechselt, in der zweiten Richtung verschiebt und das dritte elastische Element gegen das erste Kolbenblech drückt, um den entfernteren Teil des ersten Kolbenblechs in der ersten axialen Richtung in der weitestmöglichen Position zu halten.

6. Reibungskupplungsbaugruppe nach Anspruch 4, bei der das Rückschlagventil ein viertes elastisches Element beinhaltet, das auf eine Platte und eine dritte Öffnung eine dritte Kraft ausübt, wobei die Innenhülse eine zweite und eine dritte Öffnung und mindestens eine Nut auf einer inneren Fläche der Innenhülse beinhaltet, wobei die Platte, wenn sich die Innenhülse in der zweiten Position befindet und die Kraft auf der Auslassseite der Platte kleiner ist als eine Summe aus der dritten Kraft und der vom Flüssigkeitsdruck auf der Einlassseite der Platte ausgeübten Kraft, die zweite Öffnung sperrt und, wenn sich die Innenhülse in der zweiten Position befindet und die Kraft auf der Auslassseite der Platte größer ist als die Summe aus der dritten Kraft und der vom Flüssigkeitsdruck auf der Einlassseite der Platte ausgeübten Kraft, sich von der zweiten Öffnung weg bewegt, um den Flüssigkeitsstrom aus der Kammer durch die mindestens eine Nut und die erste, zweite und dritte Öffnung zu ermöglichen, und wobei mindestens eine Öffnung, die mindestens eine Nut bzw. die erste, zweite oder dritte Öffnung, so dimensioniert ist, dass sie eine Zeitdauer steuert, die zum Entleeren der Flüssigkeit aus der Kammer erforderlich ist.

7. Reibungskupplungsbaugruppe nach Anspruch 1, bei der die Kraftfahrzeugeinheit zu einer Gruppe gehört, die aus einem Automatikgetriebe und einem Drehmomentwandler besteht.

8. Reibungskupplungsbaugruppe nach Anspruch 1, wobei die Reibungskupplungsbaugruppe eine Nasskupplung oder eine Bremse beinhaltet.

9. Verfahren zum Steuern eines Reibungskupplungsvorgangs in einer Kraftfahrzeugeinheit, wobei das Verfahren die folgenden Schritte beinhaltet:
Verschieben eines Teils eines Rückschlagventils (118) zu einer ersten Position, um einen Flüssigkeitsstrom durch das Rückschlagventil (118) von einem Kanal (128) zu einer zumindest teilweise durch ein erstes Kolbenblech (104) gebildeten Kammer (126) zu ermöglichen;
Strömen einer Flüssigkeit durch das Rückschlagventil (118) zur Kammer (126);
Verschieben des ersten Kolbenblechs (104) als Reaktion auf das Strömen der Flüssigkeit in einer ersten axialen Richtung (106), um mindestens eine durch Reibung einkuppelbare Platte (112) so in Reibungskontakt zu bringen, dass sich ein Teil (134) des ersten Kolbenblechs (104), der die mindestens eine durch Reibung einkuppelbare Platte (112) in Reibungskontakt bringt, in axialer Richtung (106) in einer weitestmöglichen Position befindet;
Verschieben des Teils des Rückschlagventils (118) zu einer zweiten Position, um den Flüssigkeitsstrom zwischen der Kammer (126) und dem Kanal (128) abzusperren; und
Steuern des Flüssigkeitsvolumens in der Kammer (126), um den Teil (134) des Kolbenblechs (104) in der weitestmöglichen Position zu halten, wenn der Teil von der ersten zur zweiten Position wechselt.

10. Verfahren nach Anspruch 9, bei dem das Steuern des Flüssigkeitsvolumens in der Kammer das Ausgleichen eines durch das Rückschlagventil aus der Kammer austretenden Flüssigkeitsvolumens beinhaltet, wenn der Teil von der ersten zur zweiten Position wechselt.

11. Verfahren nach Anspruch 9, bei dem das Steuern des Flüssigkeitsvolumens das Verbiegen des ersten Kolbenblechs zum Erzeugen eines ersten Volumens in der Kammer, wenn sich der entferntere Teil des ersten Kolbenblechs in axialer Richtung in der weitestmöglichen Position und der Teil in der ersten Position befindet, und das Verbiegen des ersten Kolbenblechs in der zweiten axialen Richtung zum Erzeugen eines zweiten Volumens in der Kammer beinhaltet, wenn der Teil von der ersten zur zweiten Position wechselt, derart, dass eine Differenz zwischen dem ersten und dem zweiten Volumen im Wesentlichen gleich dem Flüssigkeitsvolumen ist, das durch das Rückschlagventil aus der Kammer austritt, wenn der Teil von der ersten zur zweiten Position wechselt.

12. Verfahren nach Anspruch 9, bei dem das Verschieben des ersten Kolbenblechs in einer ersten axialen Richtung das Verschieben eines zweiten Kolbenblechs als Reaktion auf das Strömen der Flüssigkeit beinhaltet, um ein zwischen dem ersten und dem zweiten Kolbenblech angeordnetes zweites elastisches Element zusammenzudrücken, und bei dem das Steuern des Flüssigkeitsvolumens in der Kammer das Verschieben der zweiten Platte durch das zweite elastische Element in der zweiten Richtung beinhaltet, um den entfernteren Teil des ersten Kolbenblechs in der ersten axialen Richtung in der weitestmöglichen Position zu halten, wenn der Teil von der ersten zur zweiten Position wechselt.

13. Verfahren nach Anspruch 9, bei dem die Kraftfahrzeugeinheit aus der Gruppe ausgewählt wird, die aus einem Automatikgetriebe und einem Drehmomentwandler besteht.

14. Verfahren nach Anspruch 9, bei dem die Reibungskupplungsbaugruppe eine Nasskupplung oder eine Bremse beinhaltet.

15. Verfahren nach Anspruch 9, bei dem das Rückschlagventil eine erste Öffnung und der Teil eine zweite Öffnung und mindestens eine Nut auf einer seiner Flächen beinhaltet, und wobei das Verfahren ferner folgende Schritt beinhaltet:
Verschieben einer Platte, um eine dritte Öffnung in dem Teil zu schließen, wenn sich der Teil in der zweiten Position befindet und die Kraft auf eine Auslassseite der Platte größer ist als die Kraft auf der Einlassseite der Platte;
Verschieben der Platte, um die dritte Öffnung zu öffnen, wenn sich der Teil in der zweiten Position befindet und die Kraft auf der Auslassseite der Platte größer ist als die Kraft auf der Einlassseite der Platte; und
Entleeren der Flüssigkeit aus der Kammer durch das Rückschlagventil während einer Zeitspanne, die von einer Abmessung mindestens einer Öffnung, der mindestens einen Nut bzw. der ersten, zweiten oder dritten Öffnung, abhängt.

16. Nasskupplungsbaugruppe für eine Kraftfahrzeugeinheit mit
mindestens einer durch Reibung einkuppelbaren Platte (112) sowie einem ersten und ein zweiten Kolbenblech (204, 202), die in einer ersten axialen Richtung (210) verschoben werden können, um die mindestens eine durch Reibung einkuppelbar Platte (112) in Reibungskontakt zu bringen, **dadurch gekennzeichnet, dass** die Nasskupplungsbaugruppe ein ein Rückschlagventil (118) zum Steuern des Flüssigkeitsstroms umfasst, um das zweite Kolbenblech (204) zu verschieben und ein in Kontakt mit dem ersten und dem zweiten Kolbenblech (204, 202) befindliches elastisches Element (206) umfasst, wobei das elastische Element (206), wenn Flüssigkeit durch das Rückschlagventil (118) aus einer zumindest teilweise durch das zweite Kolbenblech (202) gebildeten Kammer (126) ausströmt, das zweite Kolbenblech (202) in der zweiten Richtung (212) verschiebt, um das Flüssigkeitsvolumen in der Kammer (126) zu steuern, und gegen das erste Kolbenblech (204) drückt, um einen entfernteren Teil des ersten Kolbenblechs (204), der die mindestens eine durch Reibung einkuppelbare Platte (112) in Reibungskontakt bringt, in axialer Richtung (210) in einer weitestmöglichen Position zu halten.

## Claims

1. Friction clutch subassembly (100) for a motor vehicle unit, with at least one plate (112) couplable by friction and with a first piston dish (104) which can be displaced in a first axial direction (106), in order to bring the at least one plate (112) couplable by friction into frictional contact, and with a first elastic element (114) which is in contact with the first piston dish (104) and which presses the first piston dish (104) in a second axial direction (116) which is essentially opposite the first axial direction (106), and also with a non-return valve (118) which controls the liquid stream between a duct (128) and a chamber (126) formed partially by the first piston dish, such that the first piston dish (104) is displaced, **characterized in that** a part of the non-return valve (118), in a first position, enables the liquid stream to pass through the non-return valve (118) into the chamber (126) and, in a second position, shuts off the liquid stream between the chamber (126) and the duct (128), there being an accumulator (130) which controls the liquid volume in the chamber (126) such that, when liquid emerges from the chamber (126) through the non-return valve (118) during the change from the first to the second position, a part (134) of the first piston dish (104) which brings the at least one plate (112) couplable by friction into frictional contact remains in a furthest possible position in the first axial direction (106).

2. Friction clutch subassembly according to Claim 1, in which the non-return valve contains a second elastic element which is contact with an outlet side of an inner sleeve, the second elastic element exerting a first force, and, when a sum of a force exerted upon the outlet side of the plate by the liquid pressure and of the first force is smaller than a sum of a force exerted upon an inlet side of the inner sleeve by the liquid pressure, the inner sleeve being displaceable to a first position, in order to enable the liquid flow through the non-return valve into the chamber, and, when the sum is larger than a sum of a force exerted upon the inlet side of the inner sleeve by the liquid pressure, the inner sleeve being displaceable to a second position, in order to block the liquid stream through the non-return valve, and the accumulator controlling the liquid volume in the chamber when the inner sleeve changes from the first to the second position.

3. Friction clutch subassembly according to Claim 2, in which, when the more distant part of the first piston dish is in the furthest possible position in the first axial direction and the inner sleeve is in the first position, the first piston dish is positioned such that a first volume is generated in the chamber, and, when the inner sleeve changes from the first to the second position, the first piston dish bending in the second direction, in order to generate a second volume in the chamber, and a difference between the first and the second volume being essentially equal to the liquid volume emerging from the chamber through the non-return valve when the inner sleeve changes from the first to the second position.

4. Friction clutch subassembly according to Claim 2, in which the accumulator contains a second piston dish and a third elastic element which is in contact with the first and the second piston dish, the third elastic element exerting a second force, the chamber being formed at least partially by the second piston dish, and the second piston dish being displaceable in the first axial direction, in order to press the third elastic element against the first piston dish when the force exerted upon the second piston dish by the liquid in the chamber exceeds the second force.

5. Friction clutch subassembly according to Claim 4, in which, when the inner sleeve changes from the first to the second position, the second plate is displaced in the second direction and presses the third elastic element against the first piston dish, in order to hold the more distant part of the first piston dish in the furthest possible position in the first axial direction.

6. Friction clutch subassembly according to Claim 4, in which the non-return valve contains a fourth elastic element which exerts a third force upon a plate and a third orifice, the inner sleeve containing a second and a third orifice and at least one groove on an inner face of the inner sleeve, and, when the inner sleeve is in the second position and the force on the outlet side of the plate is lower than a sum of the third force and of the force exerted on the inlet side of the plate by the liquid pressure, the plate blocking the second orifice, and, when the inner sleeve is in the second position and the force on the outlet side of the plate is higher than the sum of the third force and of the force exerted on the inlet side of the plate by the liquid pressure, the plate moving away from the second orifice, in order to allow the liquid stream out of the chamber through the at least one groove and the first, the second and the third orifice, and at least one orifice, the at least one groove or the first, the second or the third orifice being dimensioned such that it controls a time duration which is required to empty the liquid out of the chamber.

7. Friction clutch subassembly according to Claim 1, in which the motor vehicle unit belongs to a group which is composed of an automatic transmission and of a torque converter.

8. Friction clutch subassembly according to Claim 1, the friction clutch subassembly containing a wet clutch or a brake.

9. Method for controlling a friction clutch operation in a motor vehicle unit, the method containing the following steps:
displacement of a part of a non-return valve (118) to a first position, in order to enable a liquid stream to pass through the non-return valve (118) from a duct (128) to a chamber (126) formed at least partially by a first piston dish (104);
flow of a liquid through the non-return valve (118) to the chamber (126);
displacement of the first piston dish (104) as a reaction to the flow of the liquid in a first axial direction (106), in order to bring at least one plate (112) couplable by friction into frictional contact such that a part (134) of the first piston dish (104) which brings the at least one plate (112) couplable by friction into frictional contact is in a furthest possible position in the axial direction (106);
displacement of the part of the non-return valve (118) to a second position, in order to shut off the liquid stream between the chamber (126) and the duct (128); and
control of the liquid volume in the chamber (126), in order to hold the part (134) of the piston dish (104) in the furthest possible position when the part changes from the first to the second position.

10. Method according to Claim 9, in which the control of the liquid volume in the chamber comprises the equalization of a liquid volume emerging from the chamber through the non-return valve when the part changes from the first to the second position.

11. Method according to Claim 9, in which the control of the liquid volume comprises the bending of the first piston dish to generate a first volume in the chamber, when the more distant part of the first piston dish is in the furthest possible position in the axial direction and the part is in the first position, and the bending of the first piston dish in the second axial direction to generate a second volume in the chamber, when the part changes from the first to the second position, in such a way that a difference between the first and the second volume is essentially equal to the liquid volume which emerges from the chamber through the non-return valve when the part changes from the first to the second position.

12. Method according to Claim 9, in which the displacement of the first piston dish in a first axial direction comprises the displacement of a second piston dish as a reaction to the flow of the liquid, in order to compress a second elastic element arranged between the first and the second piston dish, and in which the control of the liquid volume in the chamber comprises the displacement of the second plate by the second elastic element in the second direction, in order to hold the more distant part of the first piston dish in the furthest possible position in the first axial direction when the part changes from the first to the second position.

13. Method according to Claim 9, in which the motor vehicle unit is selected from the group which is composed of an automatic transmission and of a torque converter.

14. Method according to Claim 9, in which the friction clutch subassembly contains a wet clutch or a brake.

15. Method according to Claim 9, in which the non-return valve contains a first orifice and the part contains a second orifice and at least one groove on one of its faces, and the method containing, furthermore, the following steps:
displacement of a plate in order to close a third orifice in the part when the part is in the second position and the force on an outlet side of the plate is higher than the force on the inlet side of the plate;
displacement of the plate in order to open the third orifice when the part is in the second position and the force on the outlet side of the plate is higher than the force on the inlet side of the plate; and
emptying of the liquid out of the chamber through the non-return valve during a time span which depends on a dimension of at least one orifice, of the at least one groove or of the first, the second or the third orifice.

16. Wet clutch subassembly for a motor vehicle unit, with
at least one plate (112) couplable by friction and with a first and a second piston dish (204, 202) which can be displaced in a first axial direction (210), in order to bring the at least one plate (112) couplable by friction into frictional contact, **characterized in that** the wet clutch subassembly comprises a non-return valve (118) for controlling the liquid stream, in order to displace the second piston dish (204), and comprises an elastic element (206) which is in contact with the first and the second piston dish (204, 202), and, when liquid flows through the non-return valve (118) out of a chamber (126) formed at least partially by the second piston dish (202), the elastic element (206) displacing the second piston dish (202) in the second direction (212), in order to control the liquid volume in the chamber (126), and pressing it against the first piston dish (204), in order to hold a more distant part of the first piston dish (204) which brings the at least one plate (112) couplable by friction into frictional contact in a furthest possible position in the axial direction (210).

## Revendications

1. Module d'embrayage à friction (100) pour une unité de véhicule automobile, comprenant au moins une plaque (112) pouvant être accouplée par friction et une première tôle de piston (104) qui peut être déplacée dans une première direction axiale (106) afin d'amener l'au moins une plaque (112) pouvant être accouplée par friction en contact de friction et un premier élément élastique (114) en contact avec la première tôle de piston (104), lequel élément presse la première tôle de piston (104) dans une deuxième direction axiale (116) qui est sensiblement opposée à la première direction axiale (106), et un clapet antiretour (118) qui commande l'écoulement de liquide entre un canal (128) et une chambre (126) formée en partie par la première tôle de piston de telle sorte que la première tôle de piston (104) soit déplacée, **caractérisé en ce qu'**une partie du clapet antiretour (118), dans une première position, permet l'écoulement de liquide à travers le clapet antiretour (118) dans la chambre (126) et, dans une deuxième position, bloque l'écoulement de liquide entre la chambre (126) et le canal (128), un accumulateur (130), qui commande le volume de liquide dans la chambre (126) de telle sorte que lorsque du liquide sort de la chambre (126) à travers le clapet antiretour (118) lors du passage de la première à la deuxième position, une partie (134) de la première tôle de piston (104), qui amène l'au moins une plaque (112) pouvant être accouplée par friction en contact de friction, dans la première direction axiale (106), reste dans une position aussi éloignée que possible.

2. Module d'embrayage à friction selon la revendication 1, dans lequel le clapet antiretour contient un deuxième élément élastique en contact avec un côté de sortie d'une douille interne, le deuxième élément élastique exerçant une première force, la douille interne, lorsqu'une somme d'une force exercée par la pression de liquide sur le côté de sortie de la plaque et de la première force est inférieure à une somme d'une force exercée par la pression de liquide sur un côté d'entrée de la douille interne, pouvant être déplacée dans une première position, afin de permettre l'écoulement de liquide à travers le clapet antiretour dans la chambre, la douille interne, lorsque la somme est supérieure à une somme d'une force exercée par la pression de liquide sur le côté d'entrée de la douille interne, pouvant être déplacée dans une deuxième position, afin de bloquer l'écoulement de liquide à travers le clapet antiretour, et l'accumulateur commandant le volume de liquide dans la chambre lorsque la douille interne passe de la première à la deuxième position.

3. Module d'embrayage à friction selon la revendication 2, dans lequel la première tôle de piston, lorsque la partie plus éloignée de la première tôle de piston se trouve dans la première direction axiale dans la position aussi éloignée que possible et que la douille interne se trouve dans la première position, est positionnée de telle sorte qu'un premier volume soit produit dans la chambre, la première tôle de piston, lorsque la douille interne passe de la première à la deuxième position, se déformant dans la deuxième direction, afin de produire dans la chambre un deuxième volume, et une différence entre le premier et le deuxième volume étant essentiellement égale au volume de liquide sortant par le clapet antiretour hors de la chambre, lorsque la douille interne passe de la première à la deuxième position.

4. Module d'embrayage à friction selon la revendication 2, dans lequel l'accumulateur comprend une deuxième tôle de piston et un troisième élément élastique qui est en contact avec la première et la deuxième tôle de piston, le troisième élément élastique exerçant une deuxième force, la chambre étant au moins en partie formée par la deuxième tôle de piston, et la deuxième tôle de piston pouvant être déplacée dans la première direction axiale afin de presser le troisième élément élastique contre la première tôle de piston, lorsque la force exercée par le liquide dans la chambre sur la deuxième tôle de piston dépasse la deuxième force.

5. Module d'embrayage à friction selon la revendication 4, dans lequel la deuxième plaque, lorsque la douille interne passe de la première à la deuxième position, se déplace dans la deuxième direction et presse le troisième élément élastique contre la première tôle de piston, afin de retenir la partie plus éloignée de la première tôle de piston dans la première direction axiale dans la position aussi éloignée que possible.

6. Module d'embrayage à friction selon la revendication 4, dans lequel le clapet antiretour comprend un quatrième élément élastique qui exerce une troisième force sur une plaque et une troisième ouverture, la douille interne comprenant une deuxième et une troisième ouverture et au moins une rainure sur une surface interne de la douille interne, la plaque, lorsque la douille interne se trouve dans la deuxième position et que la force appliquée au côté de sortie de la plaque est inférieure à une somme de la troisième force et de la force exercée par la pression de liquide sur le côté d'entrée de la plaque, bloquant la deuxième ouverture, et, lorsque la douille interne se trouve dans la deuxième position et que la force appliquée au côté de sortie de la plaque est supérieure à la somme de la troisième force et de la force exercée par la pression de liquide sur le côté d'entrée de la plaque, se déplaçant à l'écart de la deuxième ouverture afin de permettre l'écoulement de liquide hors de la chambre à travers l'au moins une rainure et les première, deuxième et troisième ouvertures, et au moins une ouverture, l'au moins une rainure ou la première, deuxième ou troisième ouverture étant dimensionnée de telle sorte qu'elle commande une période de temps nécessaire pour vider la chambre du liquide.

7. Module d'embrayage à friction selon la revendication 1, dans lequel l'unité de véhicule automobile appartient à un groupe qui se compose d'une transmission automatique et d'un convertisseur de couple.

8. Module d'embrayage à friction selon la revendication 1, dans lequel le module d'embrayage à friction comprend un embrayage humide ou un frein.

9. Procédé de commande d'une opération d'embrayage à friction dans une unité de véhicule automobile, le procédé comprenant les étapes suivantes :
déplacement d'une partie d'un clapet antiretour (118) jusqu'à une première position, afin de permettre un écoulement de liquide à travers le clapet antiretour (118) depuis un canal (128) jusqu'à une chambre (126) formée au moins en partie par une première tôle de piston (104) ;
écoulement d'un liquide à travers le clapet antiretour (118) jusqu'à la chambre (126) ;
déplacement de la première tôle de piston (104) en réaction à l'écoulement du liquide dans une première direction axiale (106), afin d'amener au moins une plaque (112) pouvant être accouplée par friction en contact de friction de telle sorte qu'une partie (134) de la première tôle de piston (104), qui amène l'au moins une plaque (112) pouvant être accouplée par friction en contact de friction, se trouve dans la direction axiale (106) dans une position aussi éloignée que possible ;
déplacement de la partie du clapet antiretour (118) jusqu'à une deuxième position pour bloquer l'écoulement de liquide entre la chambre (126) et le canal (128) ; et
commande du volume de liquide dans la chambre (126) afin de retenir la partie (134) de la tôle de piston (104) dans la position aussi éloignée que possible lorsque la partie passe de la première à la deuxième position.

10. Procédé selon la revendication 9, dans lequel la commande du volume de liquide dans la chambre comprend la compensation d'un volume de liquide sortant de la chambre à travers le clapet antiretour lorsque la partie passe de la première à la deuxième position.

11. Procédé selon la revendication 9, dans lequel la commande du volume de liquide comprend la déformation de la première tôle de piston pour produire un premier volume dans la chambre lorsque la partie plus éloignée de la première tôle de piston se trouve dans la direction axiale dans la position aussi éloignée que possible et que la partie se trouve dans la première position, et la déformation de la première tôle de piston dans la deuxième direction axiale pour produire un deuxième volume dans la chambre lorsque la partie passe de la première à la deuxième position, de telle sorte qu'une différence entre le premier et le deuxième volume soit sensiblement égale au volume de liquide qui sort de la chambre par le clapet antiretour lorsque la partie passe de la première à la deuxième position.

12. Procédé selon la revendication 9, dans lequel le déplacement de la première tôle de piston dans une première direction axiale comprend le déplacement d'une deuxième tôle de piston en réaction à l'écoulement du liquide, afin de comprimer un deuxième élément élastique disposé entre la première et la deuxième tôle de piston, et dans lequel la commande du volume de liquide dans la chambre comprend le déplacement de la deuxième plaque par le deuxième élément élastique dans la deuxième direction afin de retenir la partie plus éloignée de la première tôle de piston dans la première direction axiale dans la position aussi éloignée que possible lorsque la partie passe de la première à la deuxième position.

13. Procédé selon la revendication 9, dans lequel l'unité de véhicule automobile est choisie parmi le groupe constitué d'une transmission automatique et d'un convertisseur de couple.

14. Procédé selon la revendication 9, dans lequel le module d'embrayage à friction comprend un embrayage humide ou un frein.

15. Procédé selon la revendication 9, dans lequel le clapet antiretour comprend une première ouverture et la partie comprend une deuxième ouverture et au moins une rainure sur l'une de ses surfaces, et dans lequel le procédé comprend en outre les étapes suivantes :
déplacement d'une plaque, pour fermer une troisième ouverture dans la partie, lorsque la partie se trouve dans la deuxième position et que la force appliquée à un côté de sortie de la plaque est supérieure à la force appliquée au côté d'entrée de la plaque ;
déplacement de la plaque pour ouvrir la troisième ouverture lorsque la partie se trouve dans la deuxième position et que la force appliquée au côté de sortie de la plaque est supérieure à la force appliquée au côté d'entrée de la plaque ; et
vidange du liquide hors de la chambre par le clapet antiretour pendant un intervalle de temps qui dépend de la dimension d'au moins une ouverture, de l'au moins une rainure ou de la première, deuxième ou troisième ouverture.

16. Module d'embrayage humide pour une unité de véhicule automobile, comprenant
au moins une plaque (112) pouvant être accouplée par friction ainsi qu'une première et une deuxième tôle de piston (204, 202) qui peuvent être déplacées dans une première direction axiale (210), afin d'amener en contact de friction l'au moins une plaque (112) pouvant être accouplée par friction, **caractérisé en ce que** le module d'embrayage humide comprend un clapet antiretour (118) pour commander l'écoulement de liquide afin de déplacer la deuxième tôle de piston (204) et comprend un élément élastique (206) en contact avec la première et la deuxième tôle de piston (204, 202), l'élément élastique (206), lorsque du liquide sort à travers le clapet antiretour (118) hors d'une chambre (126) formée au moins en partie par la deuxième tôle de piston (202), déplaçant la deuxième tôle de piston (202) dans la deuxième direction (212) afin de commander le volume de liquide dans la chambre (126), et la pressant contre la première tôle de piston (204) afin de maintenir une partie plus éloignée de la première tôle de piston (204), qui amène l'au moins une plaque (112) pouvant être accouplée par friction en contact de friction, dans la direction axiale (210) dans une position aussi éloignée que possible.
